# EUROPEAN PATENT SPECIFICATION

(11) **EP 2 055 623 B1**
(45) Date of publication and mention of the grant of the patent: **15.06.2011**
(21) Application number: 08166407.0
(22) Date of filing: 10.10.2008
(51) Int. Cl.: B62K 9/02, F16D 41/26

(54) **Dual-mode wheel rotating apparatus**
Radantrieb mit zwei Modi
Entraînement de roue bimode

(30) Priority: 01.11.2007 TW 96218373 U
(43) Date of publication of application: 06.05.2009
(73) Proprietor: Li, Ying-Yi, Taichung City 407 (TW)
(72) Inventor: Li, Ming-Jhang, 407, Taichung City (TW)
(74) Representative: Lang, Christian

(56) References cited:
- CA-A1- 2 217 927
- DE-A1- 4 325 443
- GB-A- 2 169 363

## Description

### BACKGROUND OF INVENTION

### 1. FIELD OF INVENTION

The present invention relates to a wheel-rotating apparatus and, more particularly, to a wheel-rotating apparatus for a tricycle which is changeable between a one-way mode and a two-way mode.

### 2. RELATED PRIOR ART

A typical tricycle for kids includes two rear wheels, a front wheel, a shaft connected to the front wheel, two cranks secured to the shaft and two pedals connected to the cranks. A kid rides the tricycle forwards by treading the pedals in one direction and rides the tricycle rearwards by treading the pedals in an opposite direction. While trying to stop or change the direction, the kid might hurt his or her feet and/or legs or damage parts of the tricycle because the inertia of the tricycle causes the pedals and cranks to continue to move.

To solve the above-mentioned problem, there has been devised a one-way tricycle including two rear wheels, a front wheel, a shaft, a one-way mechanism provided between the front wheel and the shaft, two cranks secured to the shaft and two pedals connected to the cranks. Thus, a kid can ride the one-way tricycle forwards by treading the pedals in one direction, but cannot ride the one-way tricycle rearwards by treading the pedals in an opposite direction. While trying to stop or change the direction abruptly, the kid will not hurt his or her feet and/or legs or damage parts of the tricycle because the inertia of the tricycle does not cause the pedals and cranks to continue to move.

However, the kid cannot ride the one-way bicycle by treading the pedals, and this is inconvenient.

GB 2 169 363 A discloses an alternative bicycle wheel drive mechanism. A chain sprocket is mounted to a wheel hub by a freewheel unit. Via a coupling mechanism the chain sprocket can be coupled to the wheel hub. The coupling mechanism comprises a drive ring connected to the sprocket and a drive plate connected to the wheel hub. A slide plate arranged near the drive plate can be moved by a fork plate so that drive pins of the slide plate may engage the drive ring and the drive plate. Thus the chain sprocket can be rigidly interconnected with the wheel hub overriding the effect of the freewheel unit. Although this provides the possibility of changing between freewheel mode and fixed connection between hub and sprocket, the problem of stopping and changing direction in the fixed connection mode is not solved.

Therefore, the present invention is intended to obviate or at least alleviate the problems encountered in prior art.

### SUMMARY OF INVENTION

It is the primary objective of the present invention to provide an apparatus for driving a wheel in only a forward direction in a first mode and driving the wheel in both the forward direction and a rearward direction in a second mode. According to the present invention, the apparatus includes a hub, at least one two-way bearing fit in a hub, a shaft inserted through the two-way bearing, a first disc secured to the shaft, a first one-way bearing provided between the first disc and the hub for allowing only the forward spinning of the hub on the shaft, a second disc rotationally provided on the shaft, a second one-way bearing provided between the second disc and the hub for allowing only the rearward spinning or the hub on the shaft and a clutch provided between the second disc and the shaft.

Other objectives, advantages and features of the present invention will become apparent from the following description referring to the attached drawings.

### BRIEF DESCRIPTION OF DRAWINGS

The present invention will be described via detailed illustration of the preferred embodiment referring to the drawings.
Fig. 1 is a perspective view of a tricycle according to the preferred embodiment of the present invention.
Fig. 2 is a exploded view of the tricycle shown in Fig. 1.
Fig. 3 is an enlarged partial exploded view of the tricycle shown in Fig. 2.
Fig. 4 is an enlarged partial exploded view of the tricycle shown in Fig. 3.
Fig. 5 is a cross-sectional view of the tricycle shown in Fig. 1.
Fig. 6 is an enlarged partial cross-sectional view of the tricycle shown in Fig. 1.
Fig. 7 is a cross-sectional view of the tricycle in another position than shown in Fig. 6.

### DETAILED DESCRIPTION OF PREFERRED EMBODIMENT

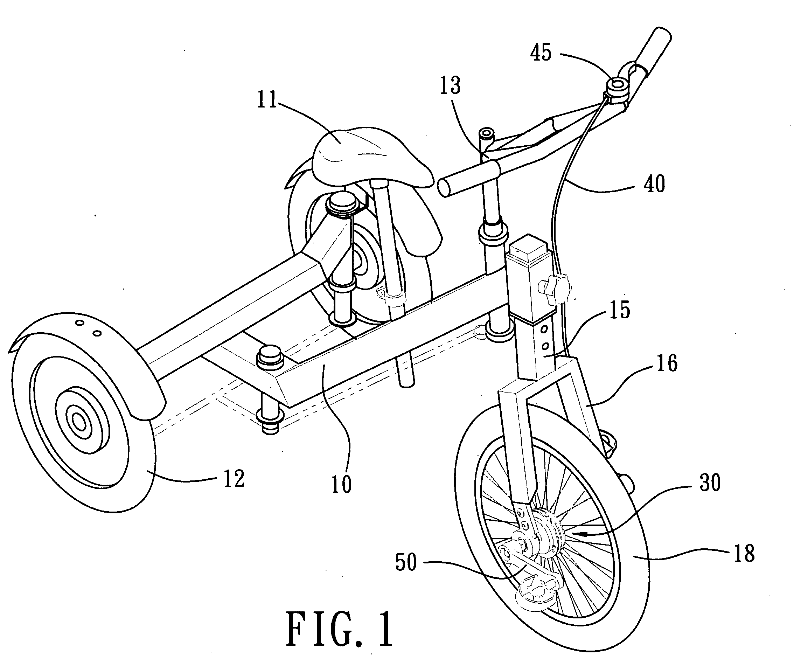

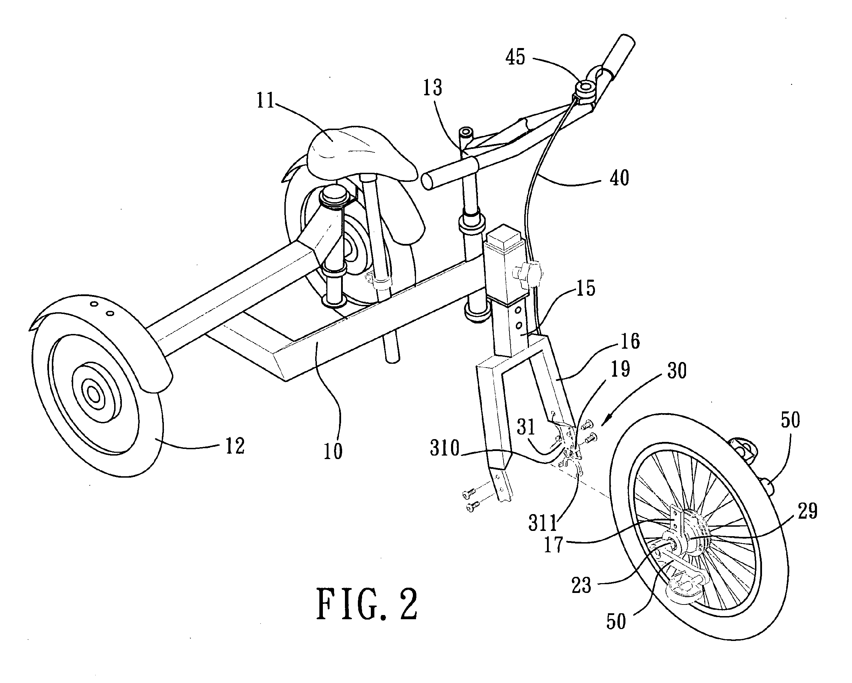

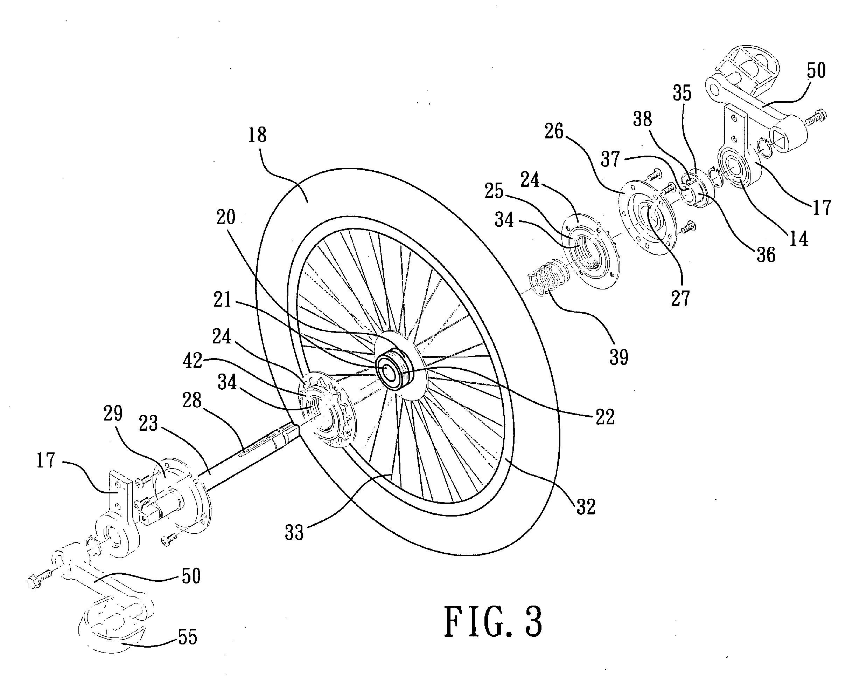

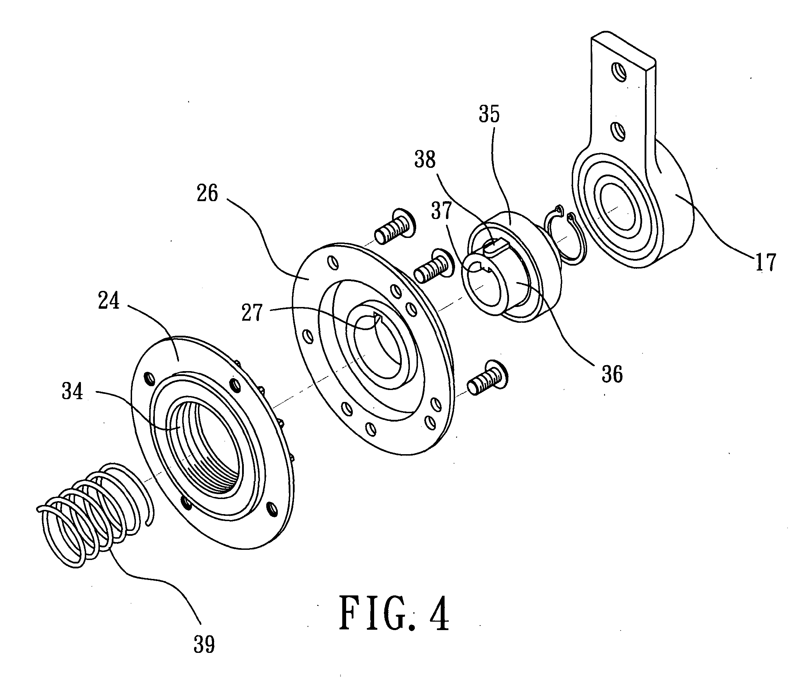

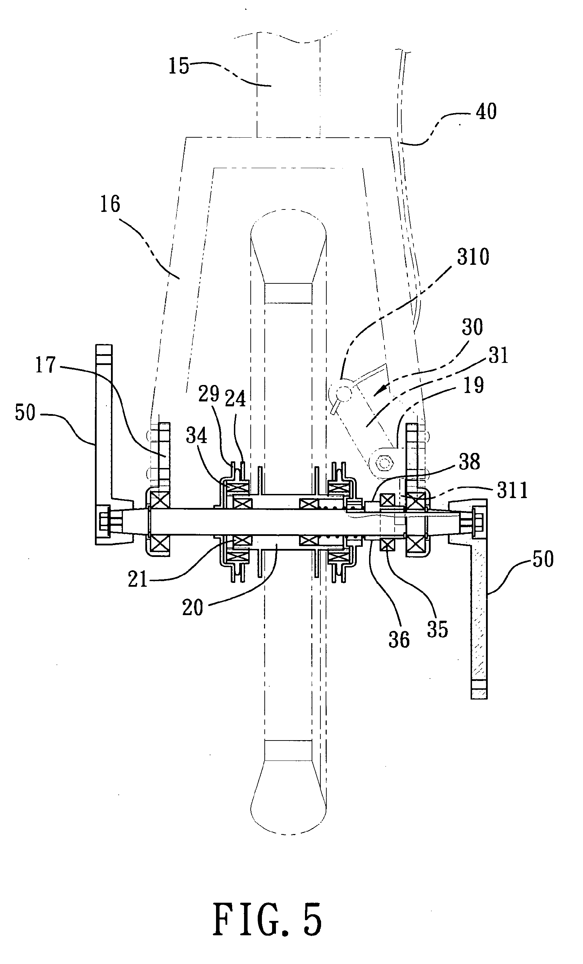

Referring to Figs. 1 through 5, there is shown a tricycle according to the preferred embodiment of the present invention. The tricycle includes a frame 10, a saddle 11 mounted on the frame 10, two rear wheels 12 connected to the frame 10, a handlebar 13 connected to the frame 10 for steering the rear wheels 12, a fork 15 connected to the frame 10, a shaft 23 connected to the fork 15, two cranks 50 connected to the shaft 23, two pedals 55 each connected to a related one of the cranks 50 and a front wheel 18. A one-way mechanism and a clutch 30 are provided between the shaft 23 and the front wheel 18.

The fork 15 includes two branches 16. An ear 17 is connected to each of the branches 16 of the fork 15. A bearing 14 is attached to each of the ears 17. The shaft 23 is rotationally supported on the bearings 14. At least one groove 28 is longitudinally defined in the shaft 23.

The front wheel 18 is provided around a rim 32. Spokes 33 are provided between the rim 32 and a hub 20. Two two-way bearings 21 are provided between the hub 20 and the shaft 23. The hub 20 includes two threads 22 formed thereon.

The one-way mechanism includes a first ring 24, a second ring 24, a first one-way bearing 42, a second one-way bearing 25, a first disc 29 and a second disc 26.

The first one-way bearing 42 is fit in the first ring 24 and includes a thread 34 engaged with a related one of the threads 22 to allow forward spinning of the hub 20 with respect to the first ring 24. The first disc 29 is secured to the first ring 24 on one hand and secured to the shaft 23 on the other hand.

The first and second rings 24 are identical. The second one-way bearing 25 is fit in the second ring 24 and includes a thread 34 engaged with a related one of the threads 22 for allowing rearward spinning of the hub 20. The second disc 26 is secured to the second ring 24 on one hand and rotationally supported on the shaft 23 on the other hand. The second disc 26 includes at least one cutout 27 on an internal side.

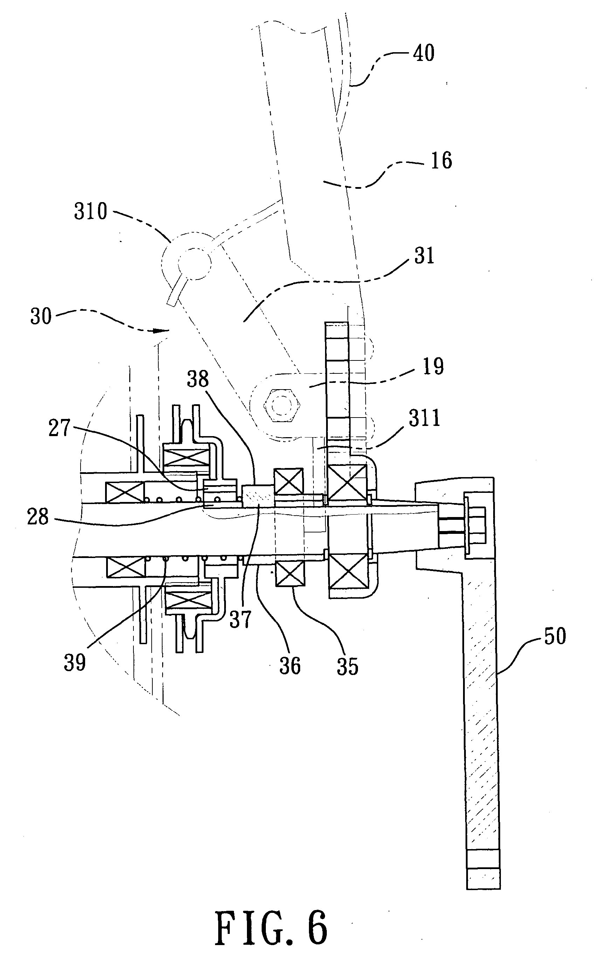

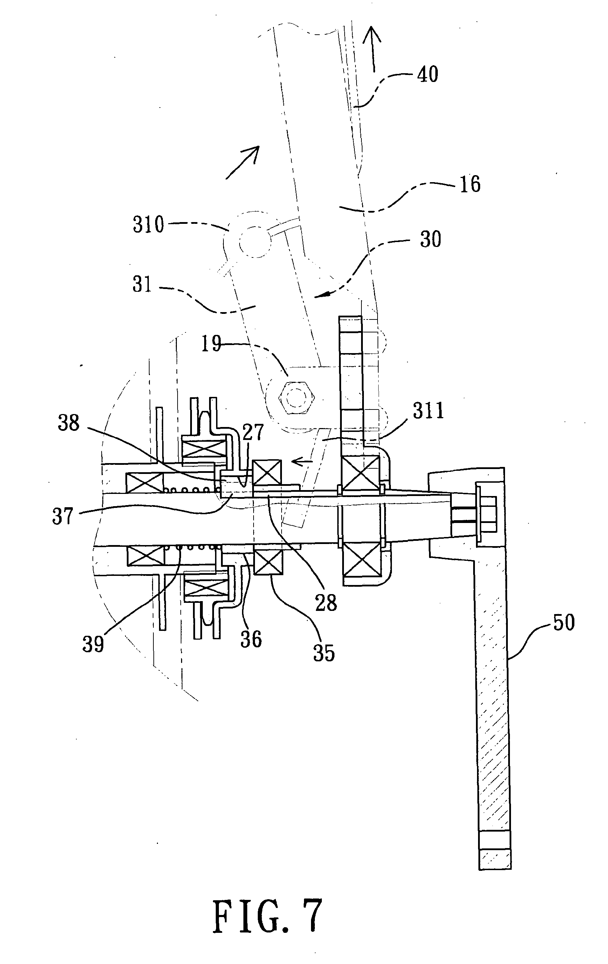

The clutch 30 includes a collar 35, an elastic element 39, a crow 31, a cable 40 and a lever 45. The collar 35 includes a reduced portion 36, at least one internal key 37 on an internal side of the reduced portion 36 and at least one external key 38 on an external side of the reduced portion 36. The internal key 37 is inserted in the groove 28. The collar 35 is movably mounted on the shaft 23 between a first position (Fig. 6) and a second position (Fig. 7). When the collar 35 is in the first position, the external key 38 is out of the cutout 27. When the collar 35 is in the second position, the external key 38 is inserted in the cutout 27.

The elastic element 39 is preferably a helical spring provided around the shaft 23 and compressed between the collar 35 and one of the two-way bearings 21. Because of the elastic element 39, the collar 35 is retained in the first position.

The crow 31 is pivotally connected to a tab 19 secured to one of the branches 16 of the fork 15. The crow 31 includes a first portion 310 and a second portion 311. The second portion 311 of the crow 31 is located next to the collar 35.

The cable 40 includes an end connected to the first portion 310 of the crow 31 and an opposite end connected to the lever 45. The lever 45 is mounted on the handlebar 13.

Referring to Fig. 6, the collar 35 is in the first position where the external key 38 of the collar 35 is out of the cutout 27. When the pedals 55 are trodden in both forward and rearward directions, the second disc 26 is not rotated by the collar 35 that is rotated together with the shaft 23. No power is provided to the hub 20 from the shaft 23 via the second disc 26, the second ring 24 and the second one-way bearing 25.

However, when the pedals 55 are trodden in the forward direction, the first disc 29 is rotated together with the shaft 23. Power is provided to the hub 20 from the shaft 23 via the first disc 29, the first ring 24 and the first one-way bearing 42. Therefore, the tricycle is ridden forwards.

Should the pedals 55 be stopped or trodden in the rearward direction, the forward spinning of the hub 20 would not be interfered as the first one-way bearing 42 is active, and the second one-way bearing 25 idle.

As discussed above, when the collar 35 is in the first position, the tricycle can only be ridden forwards, but not vice versa.

By maneuvering the lever 45, the cable 40 can be pulled, and the crow 31 pivoted. Therefore, the collar 35 can be moved from the first position to the second position.

Referring to Fig. 7, the collar 35 is in the second position where the external key 38 of the collar 35 is inserted in the cutout 27. When the pedals 55 are trodden in the rearward direction, the second disc 26 is rotated by the collar 35 that is rotated together with the shaft 23. Power is sent to the hub 20 from the shaft 23 via the second disc 26, the second ring 24 and the second one-way bearing 25.

When the pedals 55 are trodden in the forward direction, the first disc 29 is rotated together with the shaft 23. Power is provided to the hub 20 from the shaft 23 via the first disc 29, the first ring 24 and the first one-way bearing 42. Thus, the tricycle is ridden forwards.

As discussed above, when the collar 35 is in the second position, the tricycle can be ridden both forwards and rearwards.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A wheel-rotating apparatus comprising:
a hub(20);
at least one two-way bearing (21) fit in a hub(20);
a shaft (23) inserted through the two-way bearing (21);
a first disc (29) secured to the shaft (23);
a first one-way bearing (42) provided between the first disc (29) and the hub (20) for allowing only the forward spinning of the hub (20) on the shaft (23);
a second disc (26) rotationally provided on the shaft (23);
a second one-way bearing (25) provided between the second disc (26) and the hub (20) for allowing only the rearward spinning of the hub (20) on the shaft (20); and
a clutch (30) provided between the second disc(26) and the shaft (23).

2. The wheel-rotating apparatus according to claim 1, wherein the hub (20) comprises two threads (22) formed thereon, and each of the first and second one-way bearings (42, 25) comprises a thread (34) engaged with a related one of the threads (22) of the hub.

3. The wheel-rotating apparatus according to claim 1, wherein the clutch (30) comprises a collar (35) movably mounted on the shaft (23) between a first position to allow the rotation of the second disc (29) on the shaft (23) and a second position to connect the second disc (29) to the shaft (23).

4. The wheel-rotating apparatus according to claim 3, wherein the shaft (23) comprises at least one groove (28) longitudinally defined therein, the second disc (29) comprises at least one cutout (27) defined therein, and the collar (35) comprises at least one interval key (37) inserted in the groove (28) and at least one external key (3 8) for insertion in the cutout (27) when the collar (35) is in the second position.

5. The wheel-rotating apparatus according to claim 3, wherein the clutch (30) comprises an elastic element (39) provided between the two-way bearing (21) and the collar (35) to retain the collar (35) in the first position on the shaft (23).

6. The wheel-rotating apparatus according to claim 5, wherein the clutch (30) comprises a crow (31) for moving the collar (35) from the first position to the second position.

7. The wheel-rotating apparatus according to claim 1 comprising a first ring (24) connected to the first disc (29) on one hand and connected to the first one-way bearing (42) on the other hand.

8. The wheel-rotating apparatus according to claim 1 comprising a second ring (24) connected to the second disc (26) on one hand and connected to the second one-way bearing (25) on the other hand.

## Patentansprüche

1. Eine Vorrichtung zum Drehen eines Rades umfassend:
eine Nabe (20);
mindestens ein Zwei-Wege-Lager (21), das in eine Nabe (20) eingepasst ist;
eine Achse (23), die durch das Zwei-Wege-Lager (21) hindurch eingefügt ist;
eine erste Scheibe (29), die fest mit der Achse (23) verbunden ist;
ein erstes, Ein-Wege-Lager (42), das zwischen der ersten Scheibe (29) und der Nabe (20) angeordnet ist, um eine Rotation der Nabe (20) auf der Achse (23) nur in Vorwärtsrichtung zu erlauben;
eine zweite Scheibe (26), die drehbar auf der Achse (23) befestigt ist;
ein zweites, Ein-Wege-Lager (25), das zwischen der zweiten Scheibe (26) und
der Nabe (20) angeordnet ist, um eine Rotation der Nabe (20) auf der Achse (23) nur in Rückwärtsrichtung zu erlauben; und
eine Kupplung (30), die zwischen der zweiten Scheibe (26) und der Achse (23) angeordnet ist.

2. Vorrichtung zum Drehen eines Rades nach Anspruch 1, bei welcher die Nabe (20) zwei darauf befindliche Gewinde (22) umfasst, und das erste und zweite Ein-Wege-Lager (42, 25) jeweils ein Gewinde (34) umfasst, dass mit einem zugehörigen Gewinde (22) der Nabe verschraubt ist.

3. Vorrichtung zum Drehen eines Rades nach Anspruch 1, bei welcher die Kupplung (30) eine Manschette (35) umfasst, die beweglich zwischen einer ersten Position, um eine Rotation der zweiten Scheibe (29) auf der Achse (23) zu erlauben, und einer zweiten Position, um die zweite Scheibe (29) mit der Achse (23) zu verbinden, auf der Achse (23) montiert ist.

4. Vorrichtung zum Drehen eines Rades nach Anspruch 3, bei welcher die Achse (23) wenigstens eine longitudinal ausgestaltete Nut (28) umfasst, die zweite Scheibe (29) wenigstens einen Ausschnitt (27) umfasst, und die Manschette (35) wenigstens einen inneren Schlüssel (37), der in die Nut (28) eingefügt ist, und wenigstens einen äußeren Schlüssel (38) für die Einfügung in den Ausschnitt (27) umfasst, falls die Manschette (35) in der zweiten Position ist.

5. Vorrichtung zum Drehen eines Rades nach Anspruch 3, bei welcher die Kupplung (30) ein elastisches Element (39) umfasst, das zwischen dem Zwei-Wege-Lager (21) und der Manschette (35) angeordnet ist, um die Manschette (35) in der ersten Position auf der Achse (23) zu halten.

6. Vorrichtung zum Drehen eines Rades nach Anspruch 5, bei welcher die Kupplung (30) einen Hebel (31) umfasst, um die Manschette (35) von der ersten in die zweite Position zu bewegen.

7. Vorrichtung zum Drehen eines Rades nach Anspruch 1, die einen ersten Ring (24) umfasst, der einerseits mit der ersten Scheibe (29) und andererseits mit dem ersten Ein-Wege-Lager (42) verbunden ist.

8. Vorrichtung zum Drehen eines Rades nach Anspruch 1, die einen zweiten Ring (24) umfasst, der einerseits mit der zweiten Scheibe (26) und andererseits mit dem zweiten Ein-Wege-Lager (25) verbunden ist.

## Revendications

1. Appareil de rotation de roue comprenant :
un moyeu (20) ;
au moins un palier à deux voies (21) installé dans un moyeu (20) ;
un arbre (23) inséré à travers le palier à deux voies (21) ;
un premier disque (29) fixé à l'arbre (23) ;
un premier palier à une voie (42) prévu entre le premier disque (29) et le moyeu (20) pour permettre seulement la rotation rapide en avant du moyeu (20) sur l'arbre (23) ;
un second disque (26) prévu de manière rotative sur l'arbre (23) ;
un second palier à une voie (25) prévu entre le second disque (26) et le moyeu (20) pour permettre seulement la rotation rapide en arrière du moyeu (20) sur l'arbre (20) et
un embrayage (30) prévu entre le second disque (26) et l'arbre (23).

2. Appareil de rotation de roue selon la revendication 1 dans lequel le moyeu (20) comprend deux filets (22) formés sur celui-ci et chacun des premier et second paliers à une voie (42, 25) comprend un filet (34) en prise avec l'un des filets (22) apparentés du moyeu.

3. Appareil de rotation de roue selon la revendication 1 dans lequel l'embrayage (30) comprend un collier (35) monté de manière mobile sur l'arbre (23) entre une première position pour permettre la rotation du second disque (29) sur l'arbre (23) et une seconde position pour relier le second disque (29) à l'arbre (23).

4. Appareil de rotation de roue selon la revendication 3 dans lequel l'arbre (23) comprend au moins une rainure (28) qui y est définie longitudinalement, le second disque (29) comprend au moins une découpure (27) qui y est définie et le collier (35) comprend au moins une clavette interne (37) insérée dans la rainure (28) et au moins une clavette externe (38) pour l'insertion dans la découpure (27) lorsque le collier (35) est dans la seconde position.

5. Appareil de rotation de roue selon la revendication 3 dans lequel l'embrayage (30) comprend un élément élastique (39) prévu entre le palier à deux voies (21) et le collier (35) pour retenir le collier (35) dans la première position sur l'arbre (23).

6. Appareil de rotation de roue selon la revendication 5 dans lequel l'embrayage (30) comprend un levier (31) pour déplacer le collier (35) de la première position à la seconde position.

7. Appareil de rotation de roue selon la revendication 1 comprenant un premier anneau (24) relié au premier disque (29) d'une part et relié au premier palier à une voie (42) d'autre part.

8. Appareil de rotation de roue selon la revendication 1 comprenant un second anneau (24) relié au second disque (26) d'une part et relié au second palier à une voie (25) d'autre part.
